# EUROPÄISCHE PATENTANMELDUNG

(11) **EP 3 726 408 A1**
(43) Veröffentlichungstag der Anmeldung: **21.10.2020**
(21) Anmeldenummer: 19169490.0
(22) Anmeldetag: 16.04.2019
(51) Int. Cl.: G06F 21/55, G05B 19/418, G06F 21/57, G06F 21/86, H04L 29/06, H04L 29/08, G06F 21/14, G06F 21/64, H04W 12/06

(54) **INDUSTRIELLES AUTOMATISIERUNGSGERÄT UMFASSEND EINE ÜBERWACHUNGSEINHEIT ZUR ÜBERPRÜFUNG UND ÜBERWACHUNG EINES INTEGRITÄTSZUSTANDES DES INDUSTRIELLEN AUTOMATISIERUNGSGERÄTES**

(71) Anmelder: Siemens Aktiengesellschaft, 80333 München (DE)
(72) Erfinder: Blöcher, Uwe, 82178 Puchheim (DE); Falk, Rainer, 85586 Poing (DE); Feist, Christian Peter, 80689 München (DE); Pfau, Axel, 80333 München (DE); Sperl, Franz, 92526 Oberviechtach (DE); Trummer, Georg, 92224 Amberg (DE)

(57) **Zusammenfassung**

Zusammenfassend betrifft die vorliegende Erfindung ein Industrielles Automatisierungsgerät umfassend eine Überwachungseinheit zur Überprüfung und Überwachung des Integritätszustandes des industriellen Automatisierungsgerätes, mit mindestens einer Gerätekomponente, die rückwirkungsfrei über eine Kommunikationsverbindung mit der Überwachungseinheit kommuniziert, wobei die rückwirkungsfreie Kommunikation ein Bereitstellen wenigstens eines Gerätekomponentenparameters von der Gerätekomponente an die Überwachungseinheit umfasst; wobei die Überwachungseinheit ausgebildet ist, den bereitgestellten Gerätekomponentenparameter der Gerätekomponente des industriellen Automatisierungsgerätes zur Überprüfung und Überwachung des Integritätszustandes des industriellen Automatisierungsgerätes zu protokollieren und zu verarbeiten und den Integritätszustand des industriellen Automatisierungsgerätes als Ergebnis des verarbeiteten Gerätekomponentenparameters der Gerätekomponente des industriellen Automatisierungsgerätes zu protokollieren und/oder bereitzustellen; und wobei die Überwachungseinheit als eine vertrauenswürdige Gerätekomponente durch einen Manipulationsschutz manipulationsgeschützt in dem industriellen Automatisierungsgerät ausgebildet ist.

## Beschreibung

Die Integrität von Systemen, insbesondere von industriellen Automatisierungssystemen und von industriellen Automatisierungsgeräten mit mehreren Gerätekomponenten, beispielsweise Schnittstellen, Prozessor, stellt ein wichtiges Schutzziel dar. Mit der Kenntnis über die Integrität eines industriellen Automatisierungsgerätes kann davon ausgegangen werden, dass ein Automatisierungssystem oder ein industrielles Automatisierungsgerät tatsächlich die von diesem Automatisierungssystem oder dem industriellen Automatisierungsgerät erwartete Funktionalität realisiert bzw. umsetzt. Dies setzt eine Überwachung des Automationssystems oder des industriellen Automatisierungsgerätes voraus, um unberechtigte Veränderungen zu detektieren und entsprechende Maßnahmen zu ergreifen.

Aus dem Stand der Technik sind sogenannte Hypervisor bekannt, die als abstrahierende Schicht zwischen Hardware und einem oder mehrerer Betriebssysteme/Ausführungsumgebungen dienen. Dabei wird zwischen einem Typ 1 Hypervisor (Bare-Metal, direkt auf der Hardware laufenden) und Typ 2 Hypervisor (auf einem Host-Betriebssystem laufenden) unterschieden. Hypervisor können verwendet werden, um die darauf laufenden Betriebssysteme zu isolieren, ihnen nur einen Teil der Hardware zur Verfügung zu stellen oder Zugriffe auf die Hardware zu überwachen und zu kontrollieren. Der Hypervisor wird bei Virtualisierungstechnologien eingesetzt und ist als eine Softwarekomponente ausgebildet und überwacht entsprechende Software der Virtualisierung.

Zudem sind aus Rechnersystemen im Serverbereich sogenannte "Lights Out Management (LOM)" Systeme bekannt. Hierbei handelt es sich generell um einen Hardware-basierten Mechanismus, der von einem Systemadministrator verwendet werden kann, um Zugriff auf ein Serversystem zu bekommen, unabhängig davon, ob das System tatsächlich eingeschaltet ist oder ein Betriebssystem installiert wurde. Ein LOM-System wird dabei typischerweise mittels einer auf der Hauptplatine (Motherboard) vorhandenen, dedizierten Hardware-Komponente (Baseboard Management Controller (BMC)) realisiert. Dieser bietet über unabhängige Strom- und Netzwerkanschlüsse die Möglichkeit, Hardware-Parameter zu überwachen, beispielsweise die Temperatur, Einschaltstatus und/oder Laufzeiten. Die Hardware-Komponente ist daher vor allem auch dann aktiv, wenn das Serversystem runtergefahren ist. Die Diagnose und Konfiguration kann über einen vom BMC bereitgestellten Webserver erfolgen. LOM-Systeme werden vor allem für das Administrieren von Servern in Rechenzentren verwendet, so dass zum Durchführen vieler Arbeitsschritte (Diagnose, Neustart des Systems, BIOS-Konfiguration, Systeminstallation über ein Netzlaufwerk) keine physische Präsenz notwendig ist. LOM-Systeme können somit verwendet werden, um aktiv in ein System einzugreifen.

Es ist der herstellerübergreifende Standard "Intelligent Platform Management Interface" (IPMI) bekannt. Dieser Standard definiert Protokolle, Funktionen und Schnittstellen für die ferngesteuerte Überwachung und Verwaltung von Rechnersystemen. IPMI stellt somit eine Realisierung eines LOM-Systems dar. Bekannte Hersteller-spezifische Lösungen sind unter anderem "Integrated Lights-Out" (iLO - HP), "Integrated Dell Remote Access Controller" (iDRAC - Dell), oder "Integrated Management Module" (IMM - IBM).

Ferner sind Out-of-Band (OOB) Management-Technologien von Chipherstellern bekannt. Ein Beispiel ist die "Active Management Technology" (AMT - Intel). Hierbei handelt es sich um einen Satz an Management-Funktionen für PCs (Desktops/ Laptops), um diese zu überwachen (Logs, Inventarisierung), zu aktualisieren (BIOS Einstellungen) oder zu reparieren (Remote boot). AMT verwendet die sogenannte Intel Management Engine (ME), eine auf einem separaten Mikroprozessor ausgeführte Firmware, die einen eigenen TCP/IP Stack bereitstellt und dementsprechend zur Verwaltung des Rechners über ein Netzwerk verwendet werden kann. Der für das Ausführen von Intel ME und AMT verwendete Prozessor ist in dem Chipsatz integriert (z.B. Northbridge oder Platform Controller Hub). Die Firmware an sich liegt in einem separaten Speicherbaustein (z.B. SPI-Flash). Durch die Separierung von der eigentlichen CPU können auch die bereitgestellten Funktionen sowohl unabhängig von einem installierten Betriebssystem verwendet werden, als auch wenn der Rechner heruntergefahren ist. Neben Intel AMT existiert auch eine ähnliche Lösung von AMD. Diese OOB-Mechanismen können somit auf den Rest eines Systems/Automatisierungsgeräts aktiv zu- und eingreifen.

Im Zusammenhang mit Intel AMT ist das System Defense Feature bekannt. Dies kann verwendet werden, um Header von Netzwerkpaketen entsprechend einem Regelwerk zu filtern, bevor diese dem eigentlichen Betriebssystem zur Verfügung gestellt werden. Zudem können Angriffe auf Basis von Heuristiken erkannt werden. Als Reaktion kann AMT das System komplett von einem Netzwerk nehmen/isolieren, bestimmte Ports blockieren oder Paketfilter anwenden. Dieser Mechanismus kann somit ebenfalls aktiv in das System eingreifen.

Es ist daher Aufgabe der vorliegenden Erfindung, eine Überwachungseinheit, insbesondere in Hardware ausgebildet, in einem industriellen Automatisierungsgerät zu integrieren, die ein Überprüfen und Überwachen der Integrität des industriellen Gerätes anhand der verwendeten Hardware und Software in dem industriellen Gerät rückwirkungsfrei erlaubt, insbesondere für programmierbare industrielle Geräte, deren Konfiguration im Sinne von Firmware und peripherer Hardwarekomponenten veränderbar ist.

Diese Aufgabe wird erfindungsgemäß durch ein industrielles Automatisierungsgerät umfassend eine Überwachungseinheit zur Überprüfung und Überwachung des Integritätszustandes des industriellen Automatisierungsgerätes mit den in Patentanspruch 1 angegebenen Merkmalen gelöst.

Die Erfindung schafft demnach ein industrielles Automatisierungsgerät umfassend eine Überwachungseinheit zur Überprüfung und Überwachung des Integritätszustandes des industriellen Automatisierungsgerätes, mit mindestens einer Gerätekomponente die rückwirkungsfrei über eine Kommunikationsverbindung mit der Überwachungseinheit kommuniziert, wobei die rückwirkungsfreie Kommunikation ein Bereitstellen wenigstens eines Gerätekomponentenparameters von der Gerätekomponente an die Überwachungseinheit umfasst, wobei die Überwachungseinheit ausgebildet ist, den bereitgestellten Gerätekomponentenparameter der Gerätekomponente des industriellen Automatisierungsgerätes zur Überprüfung und Überwachung des Integritätszustandes des industriellen Automatisierungsgerätes zu protokollieren und zu verarbeiten und den Integritätszustand des industriellen Automatisierungsgerätes als Ergebnis des verarbeiteten Gerätekomponentenparameters der Gerätekomponente des industriellen Automatisierungsgerätes zu protokollieren und/oder bereitzustellen, und wobei die Überwachungseinheit als eine vertrauenswürdige Gerätekomponente durch einen Manipulationsschutz manipulationsgeschützt in dem industriellen Automatisierungsgerät ausgebildet ist.

Die rückwirkungsfreie Kommunikation von der Gerätekomponente zur Überwachungseinheit kann dabei über eine unidirektionale Kommunikationsverbindung erfolgen.

Im Sinne der vorliegenden Erfindung ist unter einer rückwirkungsfreien Kommunikation zwischen der Überwachungseinheit und einer Gerätekomponente des industriellen Automatisierungsgerätes eine Kommunikation zu verstehen, bei der das Ermitteln eines Gerätekomponentenparameter durch die Überwachungseinheit keinen Einfluss auf die Funktionsweise der einzelnen Gerätekomponenten des industriellen Automatisierungsgerätes hat. Insbesondere hat die Überwachungseinheit keinen Einfluss auf die Funktionsweise des industriellen Automatisierungsgerätes. Diese Rückwirkungsfreiheit ist insbesondere relevant in industriellen Automatisierungsgeräten und/oder Steuerungen von industriellen Automatisierungssystemen mit sicherheitskritischen Funktionen. Die Rückwirkungsfreiheit kann beispielsweise durch eine Trennung der Kommunikationsnetze, separate Betriebssysteme, der Verwendung von unidirektionalen Verbindungen zwischen Gerätekomponenten und der Überwachungseinheit innerhalb des Gerätes, oder eine separate Stromversorgung erreicht werden.

Zudem ist im Sinne der vorliegenden Erfindung unter dem Verarbeiten des bereitgestellten Gerätekomponentenparameters der Gerätekomponente des industriellen Automatisierungsgerätes zur Überprüfung und Überwachung des Integritätszustandes des industriellen Automatisierungsgerätes zu verstehen, dass der Gerätekomponentenparameter in Abhängigkeit seiner Art beispielsweise mit einem zu einem vorherigen Zeitpunkt detektierten oder gespeicherten Gerätekomponentenparameter verglichen wird. Aus dem Ergebnis des Vergleichs können auf die Integrität der Gerätekomponente und/oder des industriellen Automatisierungsgerätes Rückschlüsse gezogen werden. Weiterhin kann durch Vergleich einer oder mehrerer Gerätekomponentenparameter mit entsprechenden, zu einem vorherigen Zeitpunkt ermittelten und/oder gespeicherten Gerätekomponentenparametern ein Rückschluss auf die Verwendung des industriellen Automatisierungsgerätes über einen gewissen Zeitraum erfolgen, z.B. dem Anschluss bestimmter Peripheriebausteine.

Ferner ist im Sinne der vorliegenden Erfindung unter einer vertrauenswürdigen Gerätekomponente eine Gerätekomponente zu verstehen, die hierbei die korrekte Verarbeitung der bereitgestellten Gerätekomponentenparameter für die Überprüfung und Überwachung des Integritätszustandes des industriellen Automatisierungsgerätes zusichert. Diese Zusicherung wird beispielsweise durch einen Manipulationsschutz erzielt, wodurch Dritte keinen Zugriff auf die Überwachungseinheit haben und/oder eine Manipulation bzw. Angriff von außerhalb nicht auf die Überwachungseinheit erfolgen kann. Der Manipulationsschutz der Überwachungseinheit kann durch einen Tamper-Schutz bzw. durch Tamper-Erkennungs-Maßnahmen durch beispielsweise eine Bohrschutzfolie, Tamper-Sensoren für Temperatur, Spannung, Taktfrequenz, Licht, Strahlung, mechanische bzw. akustische Schwingungen oder durch Eingießen in Epoxidharz erzielt werden. Durch den Manipulationsschutz wird verhindert, dass die bereitgestellten Gerätekomponentenparameter, die durch das Überwachungsmodul verarbeitet werden, manipuliert sein können, bzw. es soll sichergestellt werden, dass die bereitgestellten Gerätekomponentenparameter auf jeden Fall vertrauenswürdig sind. Weiterhin kann so auch die korrekte Verarbeitung und Speicherung der bereitgestellten Gerätekomponentenparameter durch das Überwachungsmodul gewährleistet werden, da eine Manipulation an der Überwachungskomponente erkannt werden kann. Die Tampersensoren sind geeignet, beispielsweise einen "Provisioning attack" oder einen "fault injection attack", bei denen ein Angreifer einen physischen Zugriff auf das industrielle Automatisierungsgerät hat zu registrieren und als entsprechende Maßnahme dem industriellen Automatisierungsgerät aufzuzeigen, dass wahrscheinlich eine Manipulation erfolgt ist und eine Gerätekomponente bzw. der bereitgestellte Gerätekomponentenparameter der Gerätekomponente nicht mehr vertrauenswürdig ist. Weiterhin kann das Überwachungsmodul auf einen erkannten Angriff auch aktiv reagieren, z.B. durch das Löschen verwalteter kryptographischer Schlüssel, oder durch das Generieren eines Log-Eintrags, welcher die erkannte Manipulation festhält, oder durch Bereitstellen eines Manipulationssignals.

Der vorliegenden Erfindung liegt die Erkenntnis zugrunde, dass ein Bedarf an Management-Funktionalität für Geräte, insbesondere für Automatisierungsgeräte im industriellen Kontext, besteht. In vorteilhafter Weise können mittels der vorliegenden Erfindung diverse Eigenschaften von industriellen Automatisierungsgeräten ermittelt und protokolliert werden, um den Zustand und die Verwendung eines programmierten Gerätes, beispielsweise eines Steuergerätes oder eines embedded Linux Gerätes im industriellen Umfeld, zu ermitteln. Dadurch kann die Integrität des industriellen Automatisierungsgerätes überwacht werden. Durch die separate Überwachungseinheit kann die Überwachung, als auch die Überprüfung unabhängig vom aktuellen Betriebszustand des industriellen Automatisierungsgerätes, beispielsweise im laufenden Betrieb, im Standby, oder bei ausgeschaltetem industriellem Automatisierungsgerät, erfolgen.

Zudem kann der Integritätszustand des industriellen Automatisierungsgerätes besser überwacht werden, da nicht nur die Gerätekomponentenparameter zum aktuellen Konfigurationsstand vorliegen, sondern insbesondere auf eine vollständig protokollierte Gerätenutzungs-Historie zurückgegriffen werden kann.

Weiterhin ist eine rückwirkungsfreie Realisierung nicht nur vorteilhaft, sondern in vielen Fällen zwingend notwendig, um die eigentliche Funktionalität eines industriellen Automatisierungsgerätes nicht zu beeinflussen. Zudem ist vorteilhaft, dass die Verwendung der Überwachungseinheit nicht nur passiv, sondern auch für spezielle Fälle aktiv verwendet werden kann, beispielsweise wenn sich das Gerät in einem bestimmten Zustand befindet, z.B. einem Service- oder Entwicklungszustand. Durch die Verwendung einer separaten Stromversorgung für die Überwachungseinheit und somit die Trennung der Stromquellen ist es prinzipiell von Vorteil, dass die Überwachungseinheit immer eingeschaltet sein kann, wodurch eine kontinuierliche Überwachung und Überprüfung des Integritätszustandes des industriellen Automatisierungsgerätes ermöglicht wird.

Eine rückwirkungsfreie Realisierung hat weiterhin den Vorteil, dass dadurch eine Geräteinformation für einen digitalen Zwilling (digital Twin) des Geräts auch für betriebskritische, Safety-kritische oder Echtzeit-kritische Komponenten des Geräts verlässlich ermittelbar sind. Weiterhin kann die Überwachungsfunktionalität unabhängig von einer kritischen Gerätefunktionalität aktualisiert werden.

Weiterhin vorteilhaft ist, dass die Verwendung einer Überwachungseinheit in einer industriellen Automatisierungseinheit, für die industrielle Automatisierungseinheit einen verbesserten und flexibleren Schutz vor schadhafter Nutzung durch einen Angreifer bietet. Dies kann weiterhin zu einer Verbesserung der Sicherheit und Nachhaltigkeit der industriellen Automatisierungsgeräte beitragen.

Vorteilhafte Ausführungsformen und Weiterbildungen ergeben sich aus den Unteransprüchen, sowie aus der Beschreibung unter Bezugnahme auf die Figuren.

In einer vorteilhaften Ausführungsform des industriellen Automatisierungsgerätes ist die Überwachungseinheit als ein separater digitaler Hardwarebaustein in dem zu überwachenden industriellen Automatisierungsgerät ausgebildet.

In vorteilhafter Weise kann die Überwachungseinheit als ein separater bzw. eigener digitaler Hardwarebaustein, beispielsweise ein ASIC, FPGA, Mikrocontroller, Crypto-Controller auf einer Haupt- oder Steckplatine des industriellen Automatisierungsgerätes realisiert werden. Durch einen separaten Hardwarebaustein, der beispielsweise austauschbar ist, kann die Überwachungseinheit auf sich ändernde Gerätekomponenten angepasst werden.

In einer weiteren vorteilhaften Ausführungsform des industriellen Automatisierungsgerätes ist die Funktionalität der Überwachungseinheit zur Überprüfung und Überwachung des Integritätszustandes des industriellen Automatisierungsgerätes in einem bestehenden digitalen Baustein des zu überwachenden industriellen Automatisierungsgerätes ausgebildet.

In vorteilhafter Weise kann die Funktionalität der Überwachungseinheit in bestehende Gerätekomponenten, beispielsweise in einen bestehenden digitalen Baustein der Hauptplatine des industriellen Automatisierungsgerätes integriert werden. Hierbei wird die Hardwarefunktionalität der Überwachungseinheit, beispielsweise als ein Teil einer Prozessoreinheit auf demselben digitalen Baustein einer Gerätekomponente mit der Funktionalität der Gerätekomponente zusammen integriert. Beispielsweise kann die Überwachungseinheit als ein Teil einer speziellen Chipsatz-Komponente wie einer Northbridge integriert sein. Somit kann bereits bestehende Hardware für die Implementierung der Funktionalität der Überwachungseinheit verwendet werden. Bestehende industrielle Automatisierungsgeräte, die programmierbare Gerätekomponenten aufweisen, können somit mit der Funktionalität der Überwachungseinheit nachgerüstet werden.

In einer weiteren vorteilhaften Ausführungsform kann die Überwachungseinheit als ein FPGA-Bitstream oder als ein partieller Bitstream auf einem FPGA oder oder als (programmierbarer) Teil eines ASCIs implementiert werden. Dies ermöglicht eine verbesserte und flexiblere Überwachung des Integritätszustandes des industriellen Automatisierungsgerätes bei sich ändernden Gerätekomponenten und somit sich ändernden Gerätekomponentenparametern.

In einer weiteren vorteilhaften Ausführungsform des industriellen Automatisierungsgerätes umfasst die Überwachungseinheit mindestens eine Kommunikationsschnittstelle, die aus der Gruppe der Kommunikationsschnittstellen umfassend eine dedizierte Netzwerkschnittstelle, eine Drahtlosschnittstelle und/oder eine serielle Schnittstelle ausgewählt ist.

Für den Zugriff auf die Gerätekomponente kann beispielsweise eine dedizierte Netzwerkschnittstelle, eine Drahtlosschnittstelle, beispielsweise "Near Field Communication" (NFC), "Radio Frequency Identification" (RFID), WiFi IEEE 802.15.4 Standard, Bluetooth, Bluetooth low energy oder Zigbee, oder eine entsprechende lokale Debug-Schnittstelle, beispielsweise eine RS232-Schnittstelle verwendet werden. In vorteilhafter Weise wird somit eine Kommunikation über verschiedene Schnittstellen zwischen der Überwachungseinheit und den Gerätekomponenten ermöglicht. Weiterhin können die Daten einer Gerätekomponente, z.B. die über eine Netzwerkschnittstelle übertragenen Daten, oder die an analogen Ein-/Ausgängen anliegenden Spannungspegel, mittels dedizierter Leiterbahnen zur Überwachung an das Überwachungsmodule zur Verfügung gestellt werden. In vorteilhafter Weise kann die Überwachungseinheit Daten und Zustände rückwirkungsfrei abgreifen und die entsprechenden Gerätekomponenten anhand dieser Daten überwachen.

In einer weiteren vorteilhaften Ausführungsform des industriellen Automatisierungsgerätes kann die Überwachungseinheit durch entsprechende Kommunikationsverbindungen und zusätzliche digitale Hardwarebausteine mit den entsprechenden Schnittstellen, beispielsweise Ein- und Ausgänge, Netzwerkschnittstellen, Gehäuseschalter des industriellen Automatisierungsgerätes verbunden werden. Dies ermöglicht das Erfassen und ein anschließendes Verarbeiten der entsprechenden Gerätekomponentenparameter für die Überprüfung und Überwachung des Integritätszustandes des industriellen Automatisierungsgerätes.

In einer weiteren vorteilhaften Ausführungsform des industriellen Automatisierungsgerätes umfasst die Überwachungseinheit eine Verschlüsselungseinheit zum kryptografischen Signieren eines bereitgestellten Gerätekomponentenparameters.

In vorteilhafter Weise können die bereitgestellten Gerätekomponentenparameter kryptografisch signiert werden, bevor diese, beispielsweise an eine Auswerteeinheit übergeben werden. Über die Signatur, z.B. eine digitale Signatur oder ein Nachrichtenauthentisierungscode, können die Integrität und Authentizität der Gerätekomponentenparameter verifiziert werden, um somit sicher zu stellen, dass diese tatsächlich von der Überwachungseinheit des industriellen Automatisierungsgerätes bereitgestellt wurden. In dem Fall, dass ein Tampering-Sensor einen Angriff registriert, kann der entsprechende Schlüssel für die Signatur gelöscht werden und ein Erstellen bzw. Erzeugen der Signatur wird verhindert. Somit werden die an die Auswerteeinheit übergebenen Gerätekomponentenparameter nicht korrekt oder überhaupt nicht kryptografisch signiert, was einem nicht vertrauenswürdigen Verhalten der Überwachungseinheit und somit des industriellen Automatisierungsgerätes entspricht. Die übergebenen Gerätekomponentenparameter werden durch die Auswerteeinheit nicht ausgewertet.

In einer weiteren vorteilhaften Ausführungsform des industriellen Automatisierungsgerätes wird der kryptografisch signierte Gerätekomponentenparameter über die dedizierte Netzwerkschnittstelle der Überwachungseinheit an eine Auswerteeinheit zur Überprüfung und Überwachung des Integritätszustandes des industriellen Automatisierungsgerätes bereitgestellt.

In vorteilhafter Weise kann über diese Auswerteeinheit der Integritätszustand des industriellen Automatisierungsgerätes ausgewertet werden. Dies ist bei industriellen Automatisierungsgeräten von Vorteil, bei denen die Überwachungseinheit weder auf einen vorhandenen digitalen Hardwarebaustein implementiert werden kann, noch wo ein zusätzlicher separater digitalen Hardwarebaustein in das industrielle Automatisierungsgerät implementiert werden kann.

In einer weiteren vorteilhaften Ausführungsform des industriellen Automatisierungsgerätes umfasst die Überwachungseinheit eine separate Stromversorgung/Strompufferung zur Versorgung und Kommunikation mit der Überwachungseinheit, falls das industrielle Automatisierungsgerät nicht mit elektrischer Energie versorgt wird bzw. ausgeschaltet ist.

In vorteilhafter Weise kann die Überwachungseinheit des industriellen Automatisierungsgerätes angesprochen werden, während das eigentliche industrielle Automatisierungsgerät ausgeschaltet ist oder sich in einem Bereitschaftsmodus (Standby, Power-Save) befindet. Somit können insbesondere Vorgänge im Speicher bzw. Veränderungen im BIOS und somit in der Firmware des industriellen Automatisierungsgerätes protokolliert werden, obwohl das Automatisierungsgerät sich nicht in einem aktiven Betriebsmodus befindet.

In einer weiteren vorteilhaften Ausführungsform des industriellen Automatisierungsgerätes umfasst die Überwachungseinheit eine Speichereinheit, die zum Speichern des bereitgestellten Gerätekomponentenparameters und/oder des protokollierten Integritätszustandes des industriellen Automatisierungsgerätes ausgebildet ist.

Die Speichereinheit kann als jede Art von geeignetem Speicher ausgebildet sein. Dies würde die verschiedenen Arten von dynamischen Random Access Memory (DRAM) umfassen, wie bespielsweise SDRAM, die verschiedenen Arten von statischen RAM (SRAM) und die verschiedenen Arten von nicht-flüchtigen Speicher (PROM, EPROM und Flash-Speicher). Die Speichereinheit ist zum Speichern der Gerätekomponentenparameter ausgebildet und kann bevorzugt als ein Teil der Überwachungseinheit ausgebildet sein, oder als ein externer Speicher in dem industriellen Automatisierungsgerät.

In einer weiteren vorteilhaften Ausführungsform des industriellen Automatisierungsgerätes umfasst die Überwachungseinheit ein Anzeigeelement, insbesondere ein Touch-Display.

In einer weiteren vorteilhaften Ausführungsform des industriellen Automatisierungsgerätes wird der protokollierte Integritätszustandes des industriellen Gerätes auf dem Anzeigeelement der Überwachungseinrichtung des industriellen Automatisierungsgerätes bereitgestellt.

In vorteilhafter Weise kann somit der Integritätszustand eines industriellen Automatisierungsgerätes, beispielsweise ein Steuergerät, dargestellt werden, ohne eine Kommunikation zu einem anderen Computer, Terminal oder einem anderen Automatisierungsgerät aufzubauen und den Integritätszustand entsprechend zu übertragen und anzuzeigen. Beispielsweise kann ein Bediener direkt an der Anlage den aktuellen Integritätszustand der Anlage erfassen. Weiterhin vorteilhaft kann das Anzeigeelement als ein Touch-Display ausgebildet sein, was bei der Überprüfung und Überwachung des Integritätszustandes von mehreren Gerätekomponenten eine vereinfachte Steuerung und Bedienung der Visualisierung, beispielsweise über Bedien- und Anzeigemenüs ermöglicht.

In einer weiteren vorteilhaften Ausführungsform des industriellen Automatisierungsgerätes umfasst der Gerätekomponentenparameter eine Eigenschaft des industriellen Automatisierungsgerätes, insbesondere den aktuellen Firmenware-Stand des industriellen Automatisierungsgerätes und/oder einen Versionsstand von nachladbarer Software/Konfigurationsdaten für das industrielle Automatisierungsgerät.

In vorteilhafter Weise kann der aktuelle Firmenware-Stand, beispielsweise im SPI-Flash bzw. Stand nachladbarer Software/Programme, beispielsweise über eine SD-Karte ermittelt werden. SPI steht für "Serial Peripheral Interface" das ein Protokoll zur Kommunikation mit einer Vielzahl von Geräten, beispielsweise einem Flash-Speicher ausgelegt ist. Das Ermitteln kann zyklisch, beispielsweise durch Bilden und Speichern einer kryptografischen Prüfsumme (Hash-Wert) erfolgen. Alternativ kann der Software-Stand auch im Anschluss einer Aktualisierung ermittelt werden, beispielsweise durch ein Firmware-Update oder Laden eines neuen Programms. Dies kann beispielsweise durch Veränderung bestimmter Bereiche eines Speichermediums erkannt werden.

In einer weiteren vorteilhaften Ausführungsform des industriellen Automatisierungsgerätes umfasst der Gerätekomponentenparameter einen Zeitpunkt eines Zustandswechsels des industriellen Automatisierungsgerätes, insbesondere den Zustandswechsel des Einschaltens oder Ausschaltens des industriellen Automatisierungsgerätes.

In vorteilhafter Weise kann somit protokolliert werden, wann das industrielle Automatisierungsgerät ein- oder ausgeschaltet wurde. Insbesondere kann so festgehalten werden, wann das Gerät zum ersten Mal getestet, oder nach Verlassen der Produktion in Betrieb genommen wurde.

In einer weiteren vorteilhaften Ausführungsform des industriellen Automatisierungsgerätes umfasst der Gerätekomponentenparameter einen Zustand des industriellen Automatisierungsgerätes, insbesondere den Zeitpunkt des Öffnens des Gehäuses des industriellen Automatisierungsgerätes.

In vorteilhafter Weise kann festgehalten werden, ob und wann das Gehäuse eines Automatisierungsgerätes geöffnet wurde. Dies kann beispielsweise als Anlass genommen werden, alle darauffolgenden Messungen als nicht mehr vertrauenswürdig einzustufen (entweder durch Markierung der Daten, dem Löschen des Signaturschlüssels, oder durch ein übergeordnetes System), da diese möglicherweise anschließend manipuliert werden können. Neben dem Öffnen des Gehäuses kann auch ein Schließen des Gehäuses, ein Anstecken oder Abziehen von Erweiterungsmodulen und/oder Steckverbindern erfasst werden.

In einer weiteren vorteilhaften Ausführungsform des industriellen Automatisierungsgerätes gibt der Gerätekomponentenparameter die in dem industriellen Automatisierungsgerät integrierten Schaltkreise an, und umfasst insbesondere die Seriennummer der integrierten Schaltkreise.

In vorteilhafter Weise können die Gerätekomponenten, insbesondere die verbauten ICs, inventarisiert werden. Hierzu können beispielsweise die Seriennummern (S/Ns) der verbauten ICs in einem einmal programmierbaren Speicherbereich der Überwachungseinheit, beispielsweise in Fuses, bei der Herstellung des industriellen Automatisierungsgerätes festgehalten werden. Hierfür werden die Seriennummern der in dem industriellen Automatisierungsgerät verbauten Gerätekomponenten ausgelesen und über Fuses hartcodiert in die Überwachungseinheit während des Herstellungsprozesses des industriellen Automatisierungsgerätes einprogrammiert. Diese können mit den Seriennummern der Gerätekomponenten während der Laufzeit des industriellen Automatisierungsgerätes im Feld überprüft bzw. überwacht werden. Sollte eine Differenz registriert werden, kann somit auf den Integritätszustand des industriellen Automatisierungsgerätes geschlossen werden.

In einer weiteren vorteilhaften Ausführungsform des industriellen Automatisierungsgerätes umfasst der Gerätekomponentenparameter die Kennung und/oder Seriennummer von austauschbaren Gerätekomponenten des industriellen Automatisierungsgerätes.

In vorteilhafter Weise können die IDs oder die Seriennummern (S/Ns) von austauschbaren Hardware-Komponenten des industriellen Automatisierungsgerätes protokolliert werden. Bespielsweise können so verwendete Erweiterungsmodule (z.B. über PCIe angebunden) festgehalten werden. Dies gibt Auskunft über die Verwendung des industriellen Automatisierungsgerätes.

In einer weiteren vorteilhaften Ausführungsform des industriellen Automatisierungsgerätes umfasst der Gerätekomponentenparameter die Kennung und/oder Seriennummer von mit dem industriellen Automatisierungsgerät verbundenen peripheren Hardwarekomponenten.

In vorteilhafter Weise können auch allgemein verwendete periphere Hardwarekomponenten erfasst und festgehalten werden. Dies kann beispielsweise direkt bei einem Anstecken/Ausstecken an gewissen Schnittstellen erfolgen. So kann beispielsweise erkannt werden, ob oder welche Ein-/Ausgangs-Module an ein Netzwerk-Interface (NIF) angesteckt werden, ob gewisse Ein-/Ausgangs-Schaltsignale verwendet werden, oder ob beispielsweise ein USB-Gerät (z.B. USB-Stick) angeschlossen wurde. Auch dies kann Aufschluss über die Verwendung des industriellen Automatisierungsgerätes geben.

In einer weiteren vorteilhaften Ausführungsform des industriellen Automatisierungsgerätes umfasst der Gerätekomponentenparameter ein Kommunikationsprotokoll zur vertrauenswürdigen Kommunikation zwischen dem industriellen Automatisierungsgerät und verbundener peripherer Hardwarekomponenten.

In vorteilhafter Weise kann der Netzwerkverkehr überwacht werden. Dabei kann beispielsweise entsprechend einer konfigurierbaren Policy vorgegeben werden, welche Protokolle und deren Verhalten, beispielsweise HTTPS, Ports oder Adressen als vertrauenswürdig oder nicht vertrauenswürdig eingestuft werden sollen. Wird ein als nicht vertrauenswürdig eingestuftes Verhalten erkannt, kann dies durch die Überwachungseinheit festgehalten werden und Aufschluss über die Umgebung des industriellen Automatisierungsgerätes und dessen Verwendung geben.

Aus den gesammelten Gerätekomponentenparametern kann somit ein detaillierter Zustand, insbesondere der Integrationszustand des industriellen Automatisierungsgerätes abgeleitet werden. Zudem kann die aktuelle Verwendung des industriellen Automatisierungsgerätes (z.B. anhand der angeschlossenen Ein- und Ausgänge) charakterisiert werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserung oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
- FIG 1: ein Blockdiagramm einer Ausführungsform eines industriellen Automatisierungsgerätes mit einer integrierten Überwachungseinheit;
- FIG 2: ein weiteres Blockdiagram einer Ausführungsform eines erfindungsgemäßen industriellen Automatisierungsgerätes mit einer integrierten Überwachungseinheit in einer industriellen Anwendung;
- FIG 3: ein weiteres Blockdiagramm einer Ausführungsform eines industriellen Automatisierungsgerätes mit einer Überwachungseinheit.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist - jeweils mit denselben Bezugszeichen zu versehen.

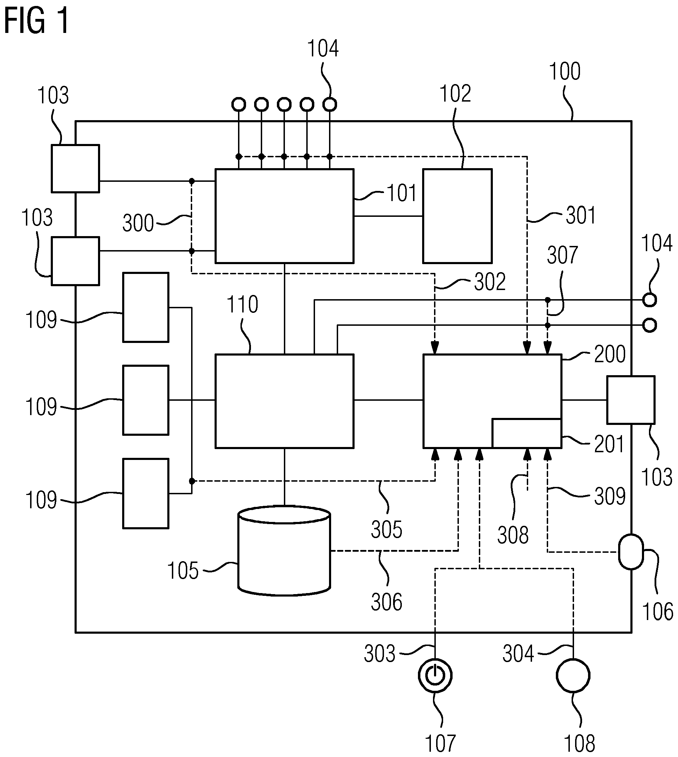

FIG 1 zeigt ein Blockdiagramm einer Ausführungsform eines industriellen Automatisierungsgerätes mit einer integrierten Überwachungseinheit.

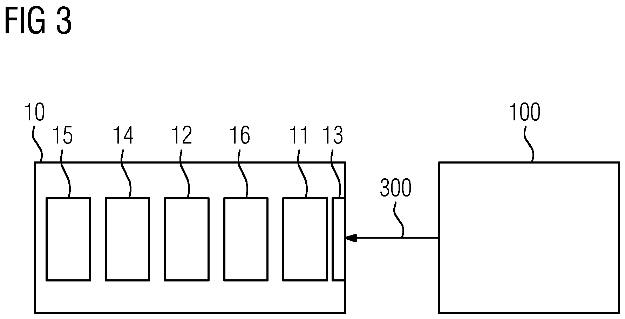

In FIG 1 bezeichnet Bezugszeichen 100 ein industrielles Automatisierungsgerät. Das industrielle Automatisierungsgerät 100 weist mehre Gerätekomponenten auf. Beispielsweise weist das industrielle Automatisierungsgerät 100 eine Prozessoreinheit 101, einen Speicher 102, eine Netzwerkschnittstelle 103, Ein- und Ausgänge 104, einen Flash-Speicher 105, einen Gehäuseschalter 106, einen Ein-/Ausschalter 107, einen Betriebsmodus-Schalter 108 und PCI-Schnittstellen 109 auf. Zudem weist das industrielle Automatisierungsgerät 100 eine Überwachungseinheit 10 (siehe FIG 3) auf, die auf einem separaten digitalen Hardwarebaustein 200 implementiert sein kann. In einer bevorzugten Ausführungsform ist die Überwachungseinheit 10 auf einem digitalen Baustein 101 oder 110 des industriellen Automatisierungsgerätes 100 implementiert sein. Die Gerätekomponenten 103, 104, 105, 106, 107, 108, 109 kommunizieren rückwirkungsfrei über die Kommunikationsverbindungen 300 bis 309 mit der Überwachungseinheit 10. Es ist jedoch auch denkbar, dass die Überwachungseinheit 10 in einer bestehenden Gerätekomponente 103, 104, 105, 106, 107, 108, 109 implementiert ist. Auch ist es denkbar, dass mehrere Überwachungseinheiten 10 vorgesehen sind.

FIG 1 stellt beispielhaft die Implementierung der Überwachungseinheit 10 in einem Hardwarebaustein 200 dar, der Teil eines industriellen Automatisierungsgerätes 100 ist. Bei dem industriellen Automatisierungsgerät 100 kann es sich beispielsweise um ein industrielles Steuergerät SIMATIC, SINUMERIK der Firma Siemens handeln. In der FIG 1 ist die Überwachungseinheit 10 auf der Hauptplatine des industriellen Automatisierungsgerätes 100 als ein separater digitaler Baustein 200 implementiert. Die Gerätekomponenten kommunizieren rückwirkungsfrei mit der Überwachungseinheit 10 und stellen diesbezüglich einen rückwirkungsfreien Datenfluss, insbesondere der Gerätekomponentenparameter dar. Beispielsweise kann die Realisierung des Daten- und Signalflusses zur Überwachungseinheit 10 in Abhängigkeit der überwachten Gerätekomponenten 103, 104, 105, 106, 107, 108, 109 umgesetzt werden, z.B. durch dezidierte Leiterbahnen, Anbindung an ein Bussystem oder Datenpfad des Chipsatzes oder der Prozessoreinheit.

Die Daten, welche über die Netzwerkschnittstelle 103 gesendet und empfangen werden, werden rückwirkungsfrei über die Kommunikationsverbindung 300 und Kommunikationsverbindung 302 durch die Überwachungseinheit 10 abgegriffen. Die Netzwerksschnittstelle 103 ist für die Kommunikation innerhalb normaler Anwendungsfälle des Gerätes vorgesehen und wird durch die Überwachungseinheit rückwirkungsfrei überwacht (z.B. Datenverkehr). Die Netzwerkschnittstelle für die Überwachungseinheit ist insofern speziell, als dass diese z.B. eine Trennung des normalen Anlagennetzwerks von einem Managementnetzwerk ermöglicht.

Bei der Überwachung des Netzwerkverkehrs kann eine konfigurierbare Policy vorgegeben werden, welche Protokolle, beispielsweise das HTTPS-Protokoll, Ports oder Adressen als vertrauenswürdig oder als nicht vertrauenswürdig einstuft. Wird hierbei ein nicht vertrauenswürdiges Verhalten (nicht erwartetes Verhalten gemäß Protokoll) über die Netzwerkschnittstelle 103 erkannt, kann dies durch die Überwachungseinheit festgehalten bzw. protokolliert werden und Aufschluss über die Umgebung, in der das industrielle Automatisierungsgerät 100 eingesetzt wird und über dessen Verwendung geben. Insbesondere kann durch die auf dem Hardwarebaustein 200 implementierte Überwachungseinheit 10 detektiert werden, welche Art von Daten durch das industrielle Automatisierungsgerät 100 über die Netzwerkschnittstelle 103 gesendet und empfangen werden. Beispielweise kann die Überwachungseinheit 10, abhängig von der implementierten Logik, die empfangenen und gesendeten Pakete analysieren und registrieren, ob eine verschlüsselte Kommunikation (HTTPS) oder unverschlüsselte Kommunikation (HTTP) durchgeführt wird. Weiterhin kann die Überwachungseinheit 10 analysieren, welcher Port für die Kommunikation verwendet wird, ob beispielsweise eine FTP-Kommunikation oder eine TELNET-Kommunikation ausgeführt wird und/oder welcher Kommunikationsstandard verwendet wird.

Der Betriebsmodus-Schalter 108 kommuniziert ebenfalls rückwirkungsfrei über die Kommunikationsverbindung 304 mit der auf dem Hardwarebaustein 200 implementierten Überwachungseinheit 10. Der Betriebsmodus-Schalter 108 kann beispielsweise genutzt werden, das industrielle Automatisierungsgerät 100 von dem Normal-Modus (normaler Arbeitsbetrieb) in einen Debug-Modus (Analysebetrieb) bzw. Service-Modus umzuschalten. Dieses Umschalten kann durch die Überwachungseinheit 10 registriert und protokolliert werden. Der Schalter kann in einer Variante auch als Steckbrücke realisiert sein. Auch ist es möglich, den Betriebsmodus anhand eines angesteckten Codiersteckers zu erkennen.

Der Ein-/Ausschalter 107 kommuniziert rückwirkungsfrei über eine Kommunikationsverbindung 303 mit der auf dem Hardwarebaustein 200 implementierten Überwachungseinheit 10. Der Ein-/Ausschalter 107 kann das industrielle Automatisierungsgerät 100 ein- und ausschalten. Die Überwachungseinheit 10 protokolliert, wann das industrielle Automatisierungsgerät 100 ein- und ausgeschaltet wurde. Insbesondere kann festgehalten werden, wann das industrielle Automatisierungsgerät 100 zum ersten Mal getestet, oder nach Verlassen der Produktion in Betrieb genommen wurde. Ferner kann durch das Protokollieren des Ein- und Ausschaltverhaltens des industriellen Automatisierungsgerätes 100 eine unsachgemäße Verwendung registriert werden, die beispielsweise zu einem Defekt an dem industriellen Automatisierungsgerät 100 geführt hat, was einen anschließenden Umtausch ausschließen könnte. Somit kann in vorteilhafter Weise eine Gewährleistungsprüfung durch die Überwachungseinheit 10 erfolgen.

Der Gehäuseschalter 106 kommuniziert rückwirkungsfrei über eine Kommunikationsverbindung 309 mit der auf dem Hardwarebaustein 200 implementierten Überwachungseinheit 10. Über den Gehäuseschalter 106 kann festgestellt werden, wann das Gehäuse des industriellen Automatisierungsgerätes 100 geöffnet wurde. Ein Öffnen des Gehäuses des industriellen Automatisierungsgerätes 100 kann als Anlass genommen werden, alle weiteren Messungen als nicht mehr vertrauenswürdig einzustufen, da nach einem Öffnen des Gehäuses des industriellen Automatisierungsgerätes 100 eventuell eine Manipulation vorgenommen wurde. Diesbezüglich kann durch den Integritätszustand des industriellen Automatisierungsgerätes 100 eine Überprüfung des industriellen Automatisierungsgerätes 100 veranlasst werden.

Der Flash-Speicher 105 kommuniziert ebenfalls rückwirkungsfrei über eine Kommunikationsverbindung 306 mit der auf dem Hardwarebaustein 200 implementierten Überwachungseinheit 10. Der Flash-Speicher 106 speichert beispielsweise den aktuellen Firmware-Stand des industriellen Automatisierungsgerätes 100. Das Speichern des Firmwarestandes kann beispielsweise zyklisch erfolgen durch Bilden und Speichern einer kryptographischen Prüfsumme der aktuelle Firmware. Diese gebildete Prüfsumme kann mit einer gespeicherten Prüfsumme, beispielsweise hartcodiert in Fuses verglichen werden. Wird hierbei ein Unterschied registriert, wird die Firmware bzw. die Software in dem Speicher als nicht mehr vertrauenswürdig eingestuft. Alternativ kann der Software-Stand auch nach einer Aktualisierung ermittelt und protokolliert werden. Dies kann beispielsweise durch Veränderung bestimmter Bereiche eines Speichermediums erkannt werden.

Ferner ist vorteilhaft, dass, wenn Updates der Firmware oder Software des industriellen Automatisierungsgerätes 100 durchgeführt wurden, durch das Protokollieren der Überwachungseinheit 10 festgehalten und/oder überprüft werden kann, wann beispielsweise die Updates durchgeführt wurden bzw. ob überhaupt ein Update der Firmware oder Software des industriellen Automatisierungsgerätes 100 durchgeführt wurde. Das Ergebnis der Überprüfung kann verwendet werden, um im Allgemeinen die Vertrauenswürdigkeit und somit den Integritätszustand des industriellen Automatisierungsgerätes 100 beurteilen zu können.

Die Überwachungseinheit 10 weist eine Kommunikationsverbindung 308 zum Protokollieren der IDs oder Seriennummern (S/Ns) von fest installierten und/oder austauschbaren peripheren Hardwarekomponenten des industriellen Automatisierungsgerätes 100 auf. Somit können, insbesondere bei Steuergeräten, die modular über Steckkarten aufgebaut und erweiterbar sind, bzw. in ihrer Funktionalität durch Austausch der Steckkarten veränderbar sind, die Gerätekomponenten registriert und bei Austausch erneut registriert werden. In vorteilhafter Weise werden somit die Seriennummern der Gerätekomponenten registriert und protokolliert. Ein Ersetzen einer Gerätekomponente durch eine andere Gerätekomponente, deren Seriennummer nicht registriert ist, was einen Vertrauensverlust in das Steuergerät zur Folge haben kann, kann somit erkannt werden. Allgemein kann so die Verwendung von unbekannten Gerätekomponenten erkannt werden.

Die Seriennummern können bei der Herstellung des industriellen Automatisierungsgerätes 100 in Fuses 201 hartcodiert werden. Dazu können die Seriennummern direkt oder eine davon abhängig gebildete Prüfsumme einer oder mehrerer Gerätekomponenten, in Fuses 201 hatcodiert werden. Dies kann vorteilhaft sein, wenn kein Tausch einer Gerätekomponente an diesem industriellen Automatisierungsgerät 100 vorgesehen ist. Weiterhin ist so auch das Whitelisting von Gerätekomponenten eines bestimmten Herstellers möglich, beispielsweise wenn die Seriennummern einem bestimmten, Hersteller-spezifischen Muster folgen.

Die PCI-Schnittstelle 109 kommuniziert rückwirkungsfrei über eine Kommunikationsverbindung 305 mit der Überwachungseinheit 10. Die Überwachungseinheit 10 kann die Kommunikation über die PCI-Schnittstelle 109 protokollieren.

Die Ein- und Ausgänge 104 kommunizieren rückwirkungsfrei über eine Kommunikationsverbindung 301 und eine Kommunikationsverbindung 307 mit der Überwachungseinheit 10. So kann bespielsweise durch die Überwachungseinheit 10 erkannt werden ob und welche Ein-/Ausgangsmodule an die Ein- und Ausgänge 104 angeschlossen werden oder ob bestimmte Ein-/Ausgangsschaltsignale verwendet werden. Insbesondere können die Zustände der Ein-/Ausgänge 104 zu bestimmten Zeitpunkten rückwirkungsfrei erfasst werden. Insgesamt kann dies einen Aufschluss über die Verwendung des industriellen Automatisierungsgerätes 100 geben.

In einer Ausführungsform kann der aktuelle und protokollierte Zustand des industriellen Automatisierungsgerätes 100 (Firmware-Stand, verwendete Gerätekomponenten, angeschlossene Ein-/Ausgangsmodule) an eine Auswerteeinheit beispielsweise ein "Network Admission Control Agent" attestiert werden. Dieser Zustand kann zudem durch die Überwachungseinheit 10 unter Verwendung eines geschützten Schlüssels signiert werden. Es kann auf diese Weise erkannt werden, ob der Integritätszustand des industriellen Automatisierungsgerätes 100 für das aktuelle Automatisierungssystem/Prozess zulässig ist und anschließend eine entsprechende Reaktion abgeleitet werden (z.B. Bereitstellen einer Nachricht an einen Betreiber/Integrator). Die Bereitstellung der Attestierungsdaten erfolgt dabei beispielsweise über eine dezidierte Netzwerkschnittstelle. Der aktuelle Zustand kann auch als ready-only Variable/Tag einem SCADA-System, beispielsweise WinCC, bereitgestellt werden. Entsprechende Abweichungen oder Änderungen können dort erkannt und festgehalten werden.

In einer Ausführungsform kann eine Historie/Log des Zustandes des industriellen Automatisierungsgerätes 100 festgehalten und bereitgestellt werden. Dabei führt jede konfigurierte Änderung (z.B. Anstecken oder Abziehen eines IO-Moduls, Aktualisierung der Firmware) zu einem neuen Eintrag, inklusive entsprechender Referenz (z.B. kryptographischer Hashwert einer Identifizierungsinformation einer angesteckten oder abgezogenen Komponente oder einer Firmware). Da diese Historie durch eine vertrauenswürdige Gerätekomponente erstellt wurde, kann dieser Prozess als eine Art "Stempel-Verfahren" interpretiert werden. Die Gerätehistorie gibt Aufschluss über die Verwendung des industriellen Automatisierungsgerätes 100 über einen gewissen Zeitraum, z.B. von der Montage bis zu einer Reparatur. Auf diese Weise kann auch eine unsachgemäße Nutzung erkannt werden. Die Bereitstellung dieser Information kann beispielsweise über eine Netzwerkschnittstelle erfolgen, oder z.B. auch lokal am industriellen Automatisierungsgerät 100 (dedizierte SD-/USB-Schnittstelle für einen Datenträger). Die gesammelten Daten können dabei auf einem gesonderten Speicherbaustein (signiert) abgespeichert werden. Weiterhin ist es möglich, die gesammelten Daten einer Datenbank oder einer Distributed Ledger (Blockchain) Infrastruktur bereitzustellen, z.B. indem eine digital signierte Transaktion gebildet wird, die die gesammelten Daten oder eine davon gebildete Prüfinformation umfasst.

Es ist vorgesehen, dass die Überwachungseinheit 10 rückwirkungsfrei realisiert wird. Dies ist besonders für industrielle Anwendungen von Bedeutung, damit die Funktionalität der Überwachungseinheit 10 nicht die eigentliche Funktion des industriellen Automatisierungsgerätes 100 beeinflussen kann. Sie ist somit passiv realisierbar. In einer weiteren Ausführungsform bietet die Überwachungseinheit 10 zum Teil aktive Funktionen, z.B. in einem gewissen Zustand (z.B. Service-, Debug- oder Entwicklungszustand), oder wenn ausgeschlossen werden kann, dass das industriellen Automatisierungsgerätes 100 aktuell einen sicherheitskritischen Prozess bedient, oder z.B. von der Hauptstromquelle getrennt ist, sodass nur noch die für die Überwachungseinheit 10 relevanten Bausteine versorgt werden. Dies kann besonders hilfreich sein, um beispielsweise die Firmware auf einen aktuellen oder vorherigen (funktionsfähigen) Zustand zu bringen, z.B. mittels Fernwartung.

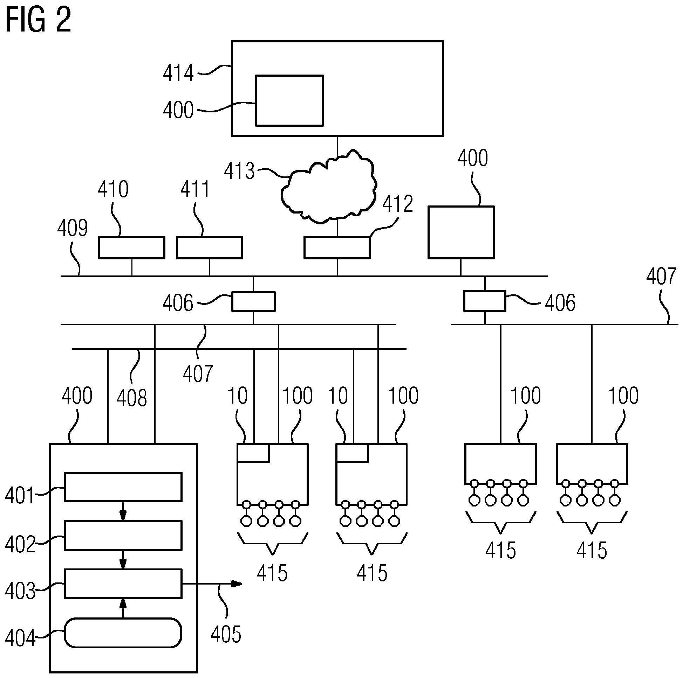

FIG 2 zeigt ein weiteres Blockdiagram einer Ausführungsform eines erfindungsgemäßen industriellen Automatisierungsgerätes 100 mit einer integrierten Überwachungseinheit 10 in einem industriellen Umfeld.

In FIG 2 ist die Anwendung des industriellen Automatisierungsgerätes 100 mit einer integrierten Überwachungseinheit 10 gemäß der vorliegenden Erfindung, die Bestandteile eines Automatisierungsnetzwerkes sind, dargestellt. Die Überwachungseinheit 10 ist dabei rückwirkungsfrei auf den jeweiligen industriellen Automatisierungsgeräten 100 realisiert. In FIG 2 bezeichnet Bezugszeichen 414 ein "Internet of Things" (IoT) - Backend, das über ein Netzwerk 413 und ein IoT-Gateway 412 mit verschiedenen Servern, beispielsweise einem Log-Server 411 und einem SCADA-Server 410 (Supervisory Control and Data Acquisition), verbunden ist. Die Kommunikation zwischen dem IoT-Gateway 412 und dem SCADA-Server 410, als auch dem Log-Server 411 erfolgt über ein Systemnetzwerk 409. Das IoT-Backend 414 umfasst einen Firmware Check Komponente 400.

Zudem ist in FIG 2 das industrielle Automatisierungsgerät 100 mit einer integrierten Überwachungseinheit 10 dargestellt. Die Überwachungseinheit 10 des industriellen Automatisierungsgerätes 100 umfasst eine eigene Netzwerkschnittstelle. Diese ermöglicht den Aufbau einer Kommunikationsverbindung der entkoppelten Überwachungseinheit 10 zu einem Verwaltungsnetzwerk 408. Das Verwaltungsnetzwerk 408 kann dabei beispielsweise nur durch autorisiertes Personal (Administratoren) zugänglich sein. Das industrielle Automatisierungsgerät 100 weist ferner eine Kommunikationsverbindung zu einem Steuernetzwerk 407 auf. Durch die Entkopplung der Überwachungseinheit 10 über das Verwaltungsnetzwerk 408, ist die Überwachungseinheit 10 nicht mehr Teil der anderen Netzwerke und über diese nicht mehr erreichbar.

Zudem ist in FIG 2 eine Firmware Check Komponente 400 mit einem Verwaltungsnetzwerk 408 und mit dem Steuernetzwerk 407 verbunden dargestellt. Die Firmware Check Komponente 400 verwendet die über das Verwaltungsnetzwerk 408 erreichbare Überwachungseinheit 10, um den protokollierten Firmware-Stand der industriellen Automatisierungsgeräte 100 rückwirkungsfrei auszulesen. Die ausgelesenen Firmware-Stände werden dabei mit einer Whitelist, beispielsweise einem "Cyber physical system (CPS) Firmware Reference Fingerprint" 404 abgeglichen. Wird eine Abweichung registriert, kann ein entsprechendes Alarmsignal 405 innerhalb der Anlage generiert werden. Wie in FIG 2 dargestellt, ist prinzipiell auch das Propagieren dieser Information durch die CPS Firmware Check Komponente 400 an entsprechende Teilnehmer, beispielsweise den SCADA-Server 410, Log-Server 411 anderer Netzwerke möglich.

Die verschiedenen Netzwerke sind über einen Gateway 406 miteinander verbunden.

In der Firmware Check Komponente 400 ist der "CPS-Firmware Reference Fingerprint" 404 hinterlegt. In einem ersten Schritt 401 wird durch die Firmware Check Komponente 400 der Fingerprint des industriellen Automatisierungsgerätes 100 angefordert. In einem zweiten Schritt 402 wird durch die Firmware Check Komponente 400 der durch das industrielle Automatisierungsgerät 100 bereitgestellte Fingerprint empfangen. In einem dritten Schritt 403 wird der empfange Fingerprint mit dem in der Firmware Check Komponente 400 hinterlegten "CPS-Firmware Reference Fingerprint" 404 verglichen. Liegt keine Übereinstimmung vor, wird ein Alarmsignal 405 ausgegeben. Das Alarmsignal 405 kann ein akustisches oder optisches Warnsignal oder ein Versenden einer digitalen Nachricht umfassen.

FIG 3 zeigt ein weiteres Blockdiagramm einer Ausführungsform eines industriellen Automatisierungsgerätes mit einer Überwachungseinheit.

In FIG 3 bezeichnet Bezugszeichen 100 das industrielle Automatisierungsgerät dessen Gerätekomponenten (nicht dargestellt) über eine Kommunikationsverbindung, beispielsweise Kommunikationsverbindung 300, mit der Überwachungseinheit 10 rückwirkungsfrei kommunizieren. In FIG 3 ist nur beispielhaft die Kommunikation zwischen der Überwachungseinheit 10 und des industriellen Automatisierungsgerätes 100 dargestellt und stellt keine Einschränkung dar. Ferner sind weitere Kommunikationsverbindungen zwischen der Überwachungseinheit 10 und dem industriellen Automatisierungsgerät 100 gegeben, auch wenn diese nicht explizit in FIG 3 dargestellt sind.

Die Überwachungseinheit 10 umfasst eine Kommunikationsschnittstellte 13 zur rückwirkungsfreien Kommunikation mit dem industriellen Automatisierungsgerät 100. Zudem umfasst die Überwachungseinheit eine Verschlüsselungseinheit/Signatureinheit 11. Die Verschlüsselungseinheit/Signatureinheit 11 umfasst einen Schlüsselspeicher (nicht dargestellt) der in Hardware oder in Software ausgebildet sein kann. Durch die Verschlüsselungseinheit/Signatureinheit 11 können die bereitgestellten Gerätekomponentenparameter signiert werden, bevor diese, beispielsweise an eine Auswerteeinheit übergeben werden. Zudem umfasst Überwachungseinheit 10 eine Verarbeitungseinheit 16. Die Verarbeitungseinheit 16 ist ausgebildet, den Gerätekomponentenparameter in Abhängigkeit seiner Art beispielsweise mit einem zu einem vorherigen Zeitpunkt detektierten oder gespeicherten Gerätekomponentenparameter zu vergleichen. Zudem umfasst die Überwachungseinheit 10 eine separate Stromversorgung/Strompufferung 12, die die Überwachungseinheit 10 mit elektrischer Energie versorgt, wenn das industrielle Automatisierungsgerät 100 ausgeschaltet ist. Zudem umfasst die Überwachungseinheit 10 eine Speichereinheit 14, in der bereitgestellte Gerätekomponentenparameter, Firmware, Schlüssel, Referenzen/Hashwerte und/oder Software gespeichert werden können. Zudem umfasst die Überwachungseinheit 10 ein Anzeigeelement 15, insbesondere ein Touch-Display. Das Anzeigeelement 15 kann als externe Komponente, insbesondere bei der Implementierung der Überwachungseinheit 10 in das industrielle Automatisierungsgerät 100 ausgebildet sein und über eine Kommunikationsverbindung mit der Überwachungseinheit verbunden sein.

Die Überwachungseinheit 10 protokolliert rückwirkungsfrei und vertrauenswürdig den Zustand des industriellen Automatisierungsgerätes 100 und stellt diesen zur Verfügung. Die Überwachungseinheit 10 erfasst diesbezüglich Gerätekomponentenparameter (z.B. welche Ein-/Ausgabe-Module und periphere Hardwarekomponenten waren wann angeschlossen, wann wurde das Gerät hochgefahren, wann wurde ein Firmware-Update eingespielt, wann ist ein Service-Zugang erfolgt) und Informationen zum aktuellen Zustand (z.B. welche Firmware oder Programme) eines industriellen Automatisierungsgerätes 100 und kann diese bereitstellen, den Rest des industriellen Automatisierungsgerätes 100 aber nicht oder nur kontrolliert (eingeschränkt) beeinflussen. Die Überwachungseinheit 10 kann für die Anwendung in offenen, programmierbaren und erweiterbaren industriellen Automatisierungsgeräten 100, wie z.B. Steuergeräten (SIMANTIC S7) oder Linux-basierten Geräten (SIMATIC IOT2000) vorgesehen werden.

Falls ein industrielles Automatisierungsgerät 100 aufgrund seiner enthaltenen Gerätekomponenten 103, 104, 105, 106, 107, 108, 109 (z.B. Firmware, angeschlossene Module, Hardware-Konfiguration) charakterisiert werden kann, ist dies für die Geräteintegrität von Vorteil. Sofern beispielsweise der aktuelle Stand der Firmware durch eine vertrauenswürdige Überwachungseinheit 10 identifiziert und durch Dritte überprüft werden kann, stellt dies einen erhöhten Nachweis für die Integrität des industriellen Automatisierungsgerätes 100 dar. Solche Informationen können zur Überprüfung herangezogen werden, ob an einem industriellen Automatisierungsgerät 100 unberechtigte Veränderungen stattgefunden haben.

Es ist nicht nur notwendig, die Geräteintegrität zu einem festen Zeitpunkt zu überprüfen, z.B. vor einer Montage, sondern diese über die gesamte Lebens- und Einsatzzeit des Gerätes zu protokollieren und zu überprüfen. Wenn sichergestellt und nachgewiesen werden kann, dass sicherheitskritische Eigenschaften (z.B. Firmware-Stand) eines industriellen Automatisierungsgerätes 100 während dessen Einsatzzeit einem bekannten Zustand entsprechen, bietet dies einen technischen Vorteil. Der Betreiber solcher industrieller Automatisierungsgeräte 100 kann sich sicher sein, dass das industrielle Automatisierungsgerät 100 einen geprüften Zustand besitzt und daher mit höherer Verlässlichkeit seine Funktionen ordnungsgemäß erfüllen kann.

Insbesondere bei zukünftigen Cyberphysischen Produktionssystemen (CPS) können charakteristische Gerätemerkmale und die Erkennung von Manipulationen der Geräteintegrität von besonderer Bedeutung sein.

Obwohl die vorliegende Erfindung vorstehend anhand bevorzugter Ausführungsbeispiele beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Industrielles Automatisierungsgerät (100) umfassend eine Überwachungseinheit (10) zur Überprüfung und Überwachung des Integritätszustandes eines industriellen Automatisierungsgerätes (100), mit
mindestens einer Gerätekomponente (103, 104, 105, 106, 107, 108, 109), die rückwirkungsfrei über eine Kommunikationsverbindung mit der Überwachungseinheit (10) kommuniziert, wobei die rückwirkungsfreie Kommunikation ein Bereitstellen wenigstens eines Gerätekomponentenparameters von der Gerätekomponente (103, 104, 105, 106, 107, 108, 109) an die Überwachungseinheit (10) umfasst;
wobei die Überwachungseinheit (10) ausgebildet ist, den bereitgestellten Gerätekomponentenparameter der Gerätekomponente (103, 104, 105, 106, 107, 108, 109) des industriellen Automatisierungsgerätes (100) zur Überprüfung und Überwachung des Integritätszustandes des industriellen Automatisierungsgerätes (100) zu protokollieren und zu verarbeiten und den Integritätszustand des industriellen Automatisierungsgerätes (100) als Ergebnis des verarbeiteten Gerätekomponentenparameters der Gerätekomponente (103, 104, 105, 106, 107, 108, 109) des industriellen Automatisierungsgerätes (100) zu protokollieren und/oder bereitzustellen; und
wobei die Überwachungseinheit (10) als eine vertrauenswürdige Gerätekomponente (103, 104, 105, 106, 107, 108, 109) durch einen Manipulationsschutz manipulationsgeschützt in dem industriellen Automatisierungsgerät (100) ausgebildet ist.

2. Industrielles Automatisierungsgerät (100) nach Anspruch 1, wobei die Überwachungseinheit (10) als ein separater digitaler Hardwarebaustein (200) in dem zu überwachenden industriellen Automatisierungsgerät (100) ausgebildet ist.

3. Industrielles Automatisierungsgerät (100) nach Anspruch 1, wobei die Funktionalität der Überwachungseinheit (10) zur Überprüfung und Überwachung des Integritätszustandes des industriellen Automatisierungsgerätes (100) in einem bestehenden digitalen Baustein (110) des zu überwachenden industriellen Automatisierungsgerätes (100) ausgebildet ist.

4. Industrielles Automatisierungsgerät (100) nach einem der vorherigen Ansprüche, wobei die Überwachungseinheit (10) mindestens eine Kommunikationsschnittstelle (13) umfasst, die:
- eine dedizierte Netzwerkschnittstelle,
- eine Drahtlosschnittstelle und/oder
- eine serielle Schnittstelle umfasst.

5. Industrielles Automatisierungsgerät (100) nach einem der vorherigen Ansprüche, wobei die Überwachungseinheit (10) eine Verschlüsselungseinheit (11) zum kryptografischen Signieren des bereitgestellten Gerätekomponentenparameters umfasst.

6. Industrielles Automatisierungsgerät (100) nach Anspruch 5, wobei der kryptografisch signierte Gerätekomponentenparameter über die dedizierte Netzwerkschnittstelle der Überwachungseinheit (10) an eine Auswerteeinheit zur Überprüfung und Überwachung des Integritätszustandes des industriellen Automatisierungsgerätes (100) bereitgestellt wird.

7. Industrielles Automatisierungsgerät (100) nach einem der vorherigen Ansprüche, wobei die Überwachungseinheit (10) eine separate Stromversorgung/Strompufferung (12) zur Versorgung und Kommunikation mit der Überwachungseinheit (10) umfasst, falls das industrielle Automatisierungsgerät (100) nicht mit elektrischer Energie versorgt ist.

8. Industrielles Automatisierungsgerät (100) nach einem der vorherigen Ansprüche, wobei die Überwachungseinheit (10) eine Speichereinheit (14) umfasst, die zum Speichern des bereitgestellten Gerätekomponentenparameters und/oder des protokollierten Integritätszustandes des industriellen Automatisierungsgerätes (100) ausgebildet ist.

9. Industrielles Automatisierungsgerät (100) nach einem der vorherigen Ansprüche, wobei die Überwachungseinheit (10) ein Anzeigeelement (15), insbesondere ein Touch-Display umfasst.

10. Industrielles Automatisierungsgerät (100) nach einem der vorherigen Ansprüche, wobei der Gerätekomponentenparameter eine Eigenschaft des industriellen Automatisierungsgerätes (100), insbesondere den aktuellen Firmenware-Stand des industriellen Automatisierungsgerätes (100) und/oder einen Versionsstand von nachladbarer Software und/oder Konfigurationsdaten für das industrielle Automatisierungsgerät (100) umfasst.

11. Industrielles Automatisierungsgerät (100) nach einem der vorherigen Ansprüche, wobei der Gerätekomponentenparameter einen Zeitpunkt eines Zustandswechsels des industriellen Automatisierungsgerätes (100), insbesondere den Zustandswechsel des Einschaltens oder Ausschaltens des industriellen Automatisierungsgerätes (100) umfasst.

12. Industrielles Automatisierungsgerät (100) nach einem der vorherigen Ansprüche, wobei der Gerätekomponentenparameter einen Zustand des industriellen Automatisierungsgerätes (100), insbesondere den Zeitpunkt des Öffnens des Gehäuses des industriellen Automatisierungsgerätes (100) umfasst.

13. Industrielles Automatisierungsgerät (100) nach einem der vorherigen Ansprüche, wobei der Gerätekomponentenparameter die in dem industriellen Automatisierungsgerät (100) integrierten Schaltkreise angibt, und insbesondere die Seriennummer der integrierten Schaltkreise umfasst.

14. Industrielles Automatisierungsgerät (100) nach einem der vorherigen Ansprüche, wobei der Gerätekomponentenparameter die Kennung und/oder Seriennummer von austauschbaren Gerätekomponenten des industrielles Automatisierungsgerät (100) umfasst und/oder wobei der Gerätekomponentenparameters die Kennung und/oder Seriennummer von mit dem industriellen Automatisierungsgerät (100) verbundenen peripherer Hardwarekomponenten umfasst.

15. Industrielles Automatisierungsgerät (100) nach einem der vorherigen Ansprüche, wobei der Gerätekomponentenparameter ein Kommunikationsprotokoll zur vertrauenswürdigen Kommunikation zwischen dem industriellen Automatisierungsgerät (100) und verbundener peripherer Hardwarekomponenten umfasst.
